# EUROPÄISCHE PATENTSCHRIFT

(11) **EP 3 656 097 B1**
(45) Veröffentlichungstag und Bekanntmachung des Hinweises auf die Patenterteilung: **08.09.2021**
(21) Anmeldenummer: 18745537.3
(22) Anmeldetag: 18.07.2018
(51) Int. Cl.: H04L 12/40, H04L 25/02, H04L 25/03

(54) **SENDE-/EMPFANGSEINRICHTUNG FÜR EIN BUSSYSTEM UND VERFAHREN ZUR REDUKTION VON LEITUNGSGEBUNDENEN EMISSIONEN**
TRANSCEIVER FOR A BUS SYSTEM, AND METHOD FOR REDUCING LINE-CONDUCTED EMISSIONS
DISPOSITIF D'ÉMISSION/RÉCEPTION POUR UN SYSTÈME DE BUS ET PROCÉDÉ DE RÉDUCTION D'ÉMISSIONS FILAIRES

(30) Priorität: 21.07.2017 DE 102017212543
(43) Veröffentlichungstag der Anmeldung: 27.05.2020
(73) Patentinhaber: Robert Bosch GmbH, 70442 Stuttgart (DE)
(72) Erfinder: WALKER, Steffen, 72770 Reutlingen (DE); BRANDO, Cyrille, 72654 Neckartenzlingen (DE)
(86) Internationale Anmeldenummer: PCT/EP2018/069498
(87) Internationale Veröffentlichungsnummer: WO 2019/016261

(56) Entgegenhaltungen:
- EP-A1- 2 800 313
- DE-A1-102014 204 048
- US-A1- 2010 201 399

## Beschreibung

Die vorliegende Erfindung betrifft eine Sende-/Empfangseinrichtung für ein Bussystem und ein Verfahren zur Reduktion von leitungsgebundenen Emissionen. Das Bussystem ist insbesondere ein CAN Bussystem. Die Sende-/Empfangseinrichtung ist insbesondere in einem CAN FD Bussystem einsetzbar, und zum Regeln des Dominantpegels des Sendesignals ausgestaltet, um leitungsgebundene Emissionen zu reduzieren.

### Stand der Technik

Je nach Bussystem existieren für eine Nachrichten- oder Datenübertragung unterschiedliche Übertragungsprotokolle, um Informationen zu übertragen, die in Bytes bzw. Bits der Nachrichten oder Daten enthalten sind. Die Informationen werden hierbei durch unterschiedliche Bitzustände oder Spannungszustände dargestellt, welche beim Übertragen der Nachricht über einen Bus des Bussystems unterschiedliche Buszustände zur Folge haben.

Beispielsweise werden beim CAN-Bussystem Nachrichten mittels des CAN- und/oder CAN FD Protokolls übertragen. Das CAN-Bussystem findet insbesondere Verwendung bei der Kommunikation zwischen Sensoren und Steuergeräten in einem Fahrzeug oder einer technischen Produktionsanlage, usw.. Bei einem CAN FD-Bussystem ist eine Datenübertragungsrate von größer 1 MBit pro Sekunde (1Mbps) möglich, beispielsweise von 2 Mbit/s, 5 Mbit/s, oder einer beliebigen anderen Datenübertragungsrate von größer 1 Mbit/s usw.. Zudem ist ein CAN-HS-Bussystem (HS = Hochgeschwindigkeit = Highspeed) bekannt, bei welchem eine Datenübertragungsrate von bis zu 500 kbit pro Sekunde (500 kbps) möglich ist.

Für die Datenübertragung in einem CAN-Bussystem fordert die heutige CAN-Physical-Layer ISO11898-2:2016 als CAN Protokoll-Spezifikation mit CAN FD eine Einhaltung vorbestimmter Parameter. Als einer dieser Parameter wird die differentielle Busspannung VDIFF während eines dominanten Buszustands betrachtet. Hierbei gilt VDIFF = CAN_H - CAN_L, wobei CAN_H ein erstes Bussignal ist und CAN_L ein zweites Bussignal ist, das von einer Sende-Empfangseinrichtung des CAN-Bussystems aus einem Sendesignal erzeugt und in zwei unterschiedliche Busleitungen oder Busadern eines Busses des Bussystems eingespeist wird. Die Sende-/Empfangseinrichtung wird auch als CAN-Transceiver oder CAN FD Transceiver usw. bezeichnet.

Gemäß dem genannten ISO-Standard definiert durch die CAN-Physical-Layer ISO11898-2:2016 muss die differentielle Busspannung VDIFF neben einer Variation der Temperatur, der Halbleiter-Prozesslage, der Versorgungsspannung, des Referenzstroms auch bei einer Variation eines Lastwiderstands RL in einem vorbestimmten Toleranzbereich liegen. Gemäß Tabelle 2 (Table 2) des genannten ISO-Standards ist eine Toleranz des Parameters VDIFF von 1,5 V bis 3,0 V bei einer Variation des Lastwiderstands RL von 50 Ohm bis 65 Ohm zulässig. Im Verlauf der Entstehung der ISO wurde dieser Parameter um eine weitere Toleranzoption des Lastwiderstands RL erweitert, nämlich von 1,4 V bis 3,3 V im Bereich eines Lastwiderstands RL von 45 Ohm bis 70 Ohm.

Diese Anforderungen erfordern nach heutigem Stand ein Transceiver-Design, weiches unter allen zuvor beschriebenen Variationsmöglichkeiten den genannten ISO-Standard einhält. Als Folge davon ist die typische differentielle Busspannung VDIFF deutlich über die Untergrenze des ISO-Standards von 1,4 V zu legen und liegt heute typischerweise bei 2,2 V.

Die Offenlegungsschrift DE 10 2014 204 048 A1 offenbart eine Sende-/Empfangseinrichtung für ein Bussystem mit einer Emissionssteuereinrichtung zur Reduktion von leitungsgebundenen Emissionen in dem Bussystem.

Die US-Offenlegungsschrift US 2010/0201399 A1 offenbart eine Treiberschaltung für einen Zweidrahtbus mit zwei Ausgangsstufen und einer Fehlererkennung anhand der erfassten Ausgangsspannungen an den Ausgangsstufen.

Das Dokument EP 2 800 313 A1 offenbart eine Sende-/Empfangseinrichtung für ein Bussystem mit einer ersten und einer zweiten Treiberschaltung, bei der die zweite Treiberschaltung nur in einem bestimmten Übertragungsmodus aktiviert wird.

Problematisch ist jedoch, dass die Höhe der differentiellen Busspannung VDIFF unmittelbar in die Eigenschaften des Bussystems und der Sende-/Empfangseinrichtung in Bezug auf die elektromagnetische Verträglichkeit (EMV) eingehen. Grundsätzlich gilt unter Berücksichtigung von realen, und damit nichtidealen, Schaltverhältnissen, dass eine höhere differentielle Busspannung VDIFF zu höherer gestrahlter Emission an den Busleitungen oder Busadern führt und umgekehrt.

### Offenbarung der Erfindung

Daher ist es Aufgabe der vorliegenden Erfindung, eine Sende-/Empfangseinrichtung für ein CAN Bussystem und ein Verfahren zur Reduktion von leitungsgebundenen Emissionen bereitzustellen, welche die zuvor genannten Probleme lösen.

Die Aufgabe wird durch eine Sende-/Empfangseinrichtung für ein CAN Bussystem mit den Merkmalen von Anspruch 1 gelöst. Die Sende-/Empfangseinrichtung umfasst einen Sender zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, einen Empfänger zum Empfangen des auf den Busadern übertragenen Bussignals, und eine Emissionsreduktionseinheit zur Steuerung der Signale für die Busadern auf der Grundlage eines erfassten Pegels einer differenziellen Busspannung der Signale auf den Busadern ausgestaltet ist, wenn ein dominanter Zustand des Sendesignals auftritt, wobei die Emissionsreduktionseinheit ausgerichtet ist sicherzustellen, dass bei sich ändernder Buslast der Pegel der differentiellen Busspannung (VDIFF) immer so klein als möglich eingestellt wird, jedoch sicher über einem geforderten Minimalwert. Mit der beschriebenen Sende-/Empfangseinrichtung wird die Abstrahlung, insbesondere von Störstrahlung, um einige dBµV verringert. Dadurch ist die leitungsgebundene Emission reduziert und die elektromagnetische Verträglichkeit (EMV) der Sende-/Empfangseinrichtung verbessert.

Die von der beschriebenen Sende-/Empfangseinrichtung durchgeführte Regelung passt sich automatisch der jeweiligen Bustopologie bzw. der vorliegenden Lastbedingung an. Dadurch ist die Regelung unabhängig von der Ausstattungsvariante eines Fahrzeugs. Zudem ist dadurch auch die Reduktion der leitungsgebundenen Emission bei unterschiedlichen Ausstattungsvarianten eines Fahrzeugs einfach erzielbar.

Ein weiterer Vorteil der beschriebenen Sende-/Empfangseinrichtung besteht in einem reduzierten Stromverbrauch beim Senden. Beispielsweise ergibt sich bei einem angenommenen Sendebetrieb von 50% duty cycle im Mittel eine etwa 5mA geringere Stromaufnahme.

Vorteilhafte weitere Ausgestaltungen der Sende-/Empfangseinrichtung sind in den abhängigen Ansprüchen beschrieben.

Gemäß einem Ausführungsbeispiel ist die Emissionsreduktionseinheit zur Steuerung von einer Treiberschaltung für Endstufen des Senders auf der Grundlage des erfassten Pegels der differenziellen Busspannung ausgestaltet, wenn ein dominanter Zustand des Sendesignals auftritt.

Gemäß einem weiteren Ausführungsbeispiel ist die Emissionsreduktionseinheit zur Steuerung der Signale für die Busadern ausgestaltet, einen Widerstandswert eines Widerstands zu steuern, der in einem Sendepfad zwischen der ersten Busader und einem Anschluss für eine Spannungsversorgung der Sende-/Empfangseinrichtung angeordnet ist, und/oder die Emissionsreduktionseinheit ist zur Steuerung der Signale für die Busadern ausgestaltet, einen Widerstandswert eines Widerstands zu steuern, der in einem Sendepfad zwischen der zweiten Busader und einem Anschluss für Masse der Sende-/Empfangseinrichtung angeordnet ist.

Die Emissionsreduktionseinheit hat möglicherweise zur Erfassung einer differenziellen Busspannung der Signale auf den Busadern einen Detektor, welcher parallel zu den Eingängen eines Empfangskomparators des Empfängers geschaltet ist. Der Detektor kann ein Differenzverstärker sein.

Denkbar ist, dass die Emissionsreduktionseinheit ausgestaltet ist, für den dominanten Buszustand des Sendesignals den erfassten Pegel der differenziellen Busspannung mit einem Sollwert zu vergleichen.

Möglicherweise ist die Sende-/Empfangseinrichtung eine CAN FD Sende-/Empfangseinrichtung.

Die zuvor beschriebene Sende-/Empfangseinrichtung kann Teil eines Bussystems sein, das einen Bus, und mindestens zwei Teilnehmerstationen aufweist, welche über den Bus derart miteinander verbunden sind, dass sie miteinander kommunizieren können. Hierbei weist mindestens eine der mindestens zwei Teilnehmerstationen eine zuvor beschriebene Sende-/Empfangseinrichtung auf.

Die zuvor genannte Aufgabe wird zudem durch ein Verfahren zur Reduktion von leitungsgebundenen Emissionen mit den Merkmalen von Anspruch 10 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist. Hierbei weist die Sende-/Empfangseinrichtung einen Sender, einen Empfänger und eine Emissionsreduktionseinheit auf, wobei das Verfahren die Schritte aufweist: Senden, mit dem Sender, eines Sendesignals an eine erste Busader des Busses, Senden des Sendesignals an eine zweite Busader des Busses, Empfangen, mit dem Empfänger, des auf den Busadern übertragenen Bussignals, und Steuern, mit der Emissionsreduktionseinheit, der Signale für die Busadern auf der Grundlage eines erfassten Pegels einer differenziellen Busspannung der Signale auf den Busadern, wenn ein dominanter Zustand des Sendesignals auftritt, wobei die Emissionsreduktionseinheit sicherstellt, dass bei sich ändernder Buslast der Pegel der differentiellen Busspannung (VDIFF) immer so klein als möglich eingestellt wird, jedoch sicher über einem geforderten Minimalwert.

Das Verfahren bietet dieselben Vorteile, wie sie zuvor in Bezug auf die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaltbild einer Sende-/Empfangseinrichtung in dem Bussystem gemäß dem ersten Ausführungsbeispiel;
Fig. 3 einen zeitlichen Verlauf eines Sendesignals TxD bei einer Sende-/Empfangseinrichtung gemäß dem ersten Ausführungsbeispiel;
Fig. 4 einen zeitlichen Verlauf von Bussignalen CAN_H und CAN_L bei der Sende-/Empfangseinrichtung gemäß dem ersten Ausführungsbeispiel im Vergleich zu einem zeitlichen Verlauf der Bussignale bei einer herkömmlichen Sende-/Empfangseinrichtung;
Fig. 5 einen zeitlichen Verlauf einer Differenzspannung VDIFF der Bussignale CAN_H und CAN_L bei der Sende-/Empfangseinrichtung gemäß dem ersten Ausführungsbeispiel im Vergleich zu einem zeitlichen Verlauf der Differenzspannung VDIFF bei einer herkömmlichen Sende-/Empfangseinrichtung;
Fig. 6 einen zeitlichen Verlauf eines Emissionssignals ES bei der Sende-/Empfangseinrichtung gemäß dem ersten Ausführungsbeispiel im Vergleich zu einem zeitlichen Verlauf eines Emissionssignals ES bei der herkömmlichen Sende-/Empfangseinrichtung; und
Fig. 7 ein Schaltbild einer Sende-/Empfangseinrichtung in einem Bussystem gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

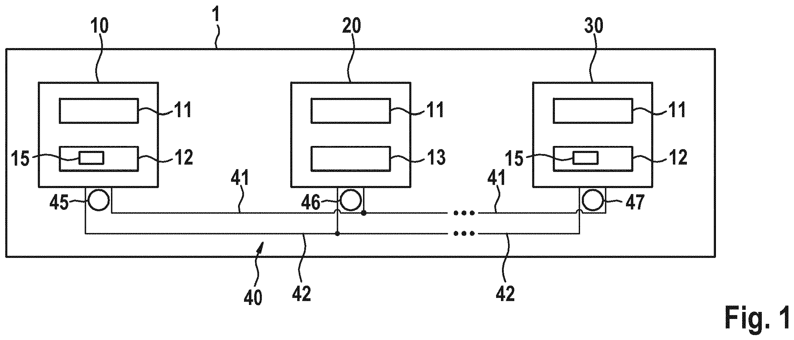

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtungen 12 umfassen jeweils eine Emissionsreduktionseinheit 15. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden und Empfangen der Nachrichten 45, 47 in Form von Signalen und nutzt hierbei die Emissionsreduktionseinheit 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 12 kann ansonsten insbesondere wie ein herkömmlicher CAN-Transceiver und/oder CAN-FD-Transceiver ausgeführt sein. Die Sende-/Empfangseinrichtung 13 dient zum Senden und Empfangen der Nachrichten 46 in Form von Signalen. Ansonsten kann die Sende-/Empfangseinrichtung 13 wie ein herkömmlicher CAN-Transceiver ausgeführt sein.

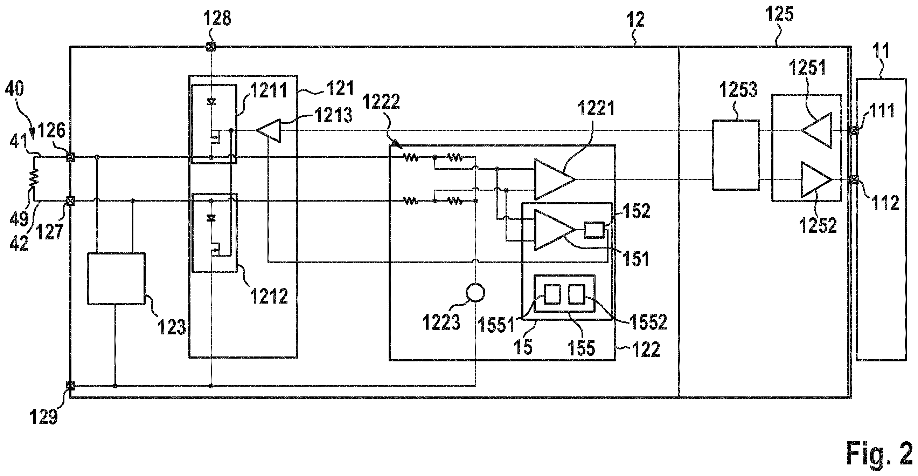

Fig. 2 zeigt den grundlegenden Aufbau der Sende-/Empfangseinrichtung 12 mit der Emissionsreduktionseinheit 15. Die Sende-/Empfangseinrichtung 12 ist an Anschlüssen 126, 127 an den Bus 40, genauer gesagt dessen erste Busader 41 für CAN_H und dessen zweite Busader 42 für CAN_L angeschlossen. An der Sende-/Empfangseinrichtung 12 erfolgt die Spannungsversorgung, insbesondere CAN-Supply, für die erste und zweite Busader 41, 42 über einen Anschluss 128. Die Verbindung der Sende-/Empfangseinrichtung 12 mit Masse bzw. CAN_GND ist über einen Anschluss 129 realisiert. Zur Terminierung der ersten und zweiten Busader 41, 42 ist bei dem gezeigten Beispiel ein Abschlusswiderstand 49 vorgesehen.

Die erste und zweite Busader 41, 42 sind bei der Sende-/Empfangseinrichtung 12 mit einem Sender 121, der auch als Transmitter bezeichnet wird, und mit einem Empfänger 122 verbunden, der auch als Receiver bezeichnet wird. Zum Schutz vor leitungsgebundener Emission ist eine Überspannungsschutzeinheit 123 zum Schutz der Sende-/Empfangseinrichtung 12 gegen elektrostatische Entladung (ESD = electrostatic discharge) vorgesehen, die bei den Anschlüssen 126, 127 angeschlossen ist. Sowohl mit dem Sender 121 als auch dem Empfänger 122 ist eine Anschalteinheit 125 zum Treiben von Signalen über die Anschlüsse 111, 112 an die Kommunikationssteuereinrichtung 11 verbunden.

Zum Treiben der Signale der Anschlüsse 111, 112 hat die Anschalteinheit 125 einen Sendesignaltreiber 1251 für ein Sendesignal TxD, das auch als TxD-Signal bezeichnet wird und an dem Anschluss 111 von der Kommunikationssteuereinrichtung 11 empfangen wird. Zudem hat die Anschalteinheit 125 einen Empfangssignaltreiber 1252 für ein Empfangssignal RxD, das auch als RxD-Signal bezeichnet wird. Das Empfangssignal RxD wurde von den Busadern 41, 42 mittels des Empfängers 122 empfangen und wird über den Anschluss 112 an die Kommunikationssteuereinrichtung 11 weitergegeben. Die Treiber 1251, 1252 sind über einen Digitalteil 1253 mit dem Sender 121 und dem Empfänger 122 verbunden. Das Digitalteil 1253 kann eine Überwachung der Signale TxD, RxD durchführen.

Gemäß Fig. 2 hat der Sender 121 eine herkömmliche Endstufe 1211 für das Signal CAN_H für die erste Busader 41 und eine herkömmliche Endstufe 1212 für das Signal CAN_L für die zweite Busader 42. Außerdem hat der Sender 121 eine Treiberschaltung 1213, die mit der Emissionsreduktionseinheit 15 verbunden ist. Gemäß Fig. 2 ist eine Variante dargestellt, bei welcher die Treiberschaltung 1211 mit einem Stromausgang die Gates der Endstufen 1211, 1212 lädt.

Der Empfänger 122 hat einen Empfangskomparator 1221, dessen Eingänge in einem einem resistiven, insbesondere symmetrischen, Spannungsteiler 1222, genauer gesagt dessen Mittelabgriff, verschaltet sind, und eine Busvorspannungseinheit 1223. Zudem ist die Emissionsreduktionseinheit 15 bei dem speziellen Beispiel von Fig. 2 in den Empfänger 122 eingebaut. Die Busvorspannungseinheit 1223 speist den resistiven Spannungsteiler 1222 an seinem einen Ende mit einer vorbestimmten Busvorspannung oder einem vorbestimmten Busvorspannungspotenzial. Der resistive Spannungsteiler 1222 ist an seinem anderen Ende an die erste und zweite Busader 41, 42 angeschlossen.

Zur Ermittlung der differentiellen Busspannung VDIFF wird die bereits bestehende Struktur zur Datenerkennung des Empfängers 122 verwendet. Die Bussignale der ersten und zweiten Busader 41, 42 werden mittels des resistiven Spannungsteilers 1222 um den Faktor 30 bis 50 heruntergeteilt, um dem Niedervolt- Empfangskomparator 1221 ein verwertbares Signal zu liefern.

Die Emissionsreduktionseinheit 15 hat einen Detektor 151, eine Auswerte- und Steuereinheit 152 und eine Speichereinheit 155. Die Emissionsreduktionseinheit 15, genauer gesagt ihr Detektor 151, nutzt die für den Empfangskomparator 1221 vorhandenen Abgriff-Punkte, um mit dem Detektor 151 den Pegel der differentiellen Busspannung VDIFF zu erfassen und damit zu erkennen. Die Eingänge des Empfangskomparators 1221 sind somit parallel zu den Eingängen des Detektors 151 geschaltet.

Das Erfassungsergebnis des Detektors 151 wird der Auswerte- und Steuereinheit 152 zugeführt. Außerdem ist das Erfassungsergebnis des Detektors 151 in Form eines erfassten Werts oder Ist-Werts 1551 in der Speichereinheit 155 speicherbar. Die Auswerte- und Steuereinheit 152 ist ausgestaltet, die Ablage zu einem Sollwert 1552 zu ermitteln, der in der Speichereinheit 155 gespeichert ist. In anderen Worten ist die Auswerte- und Steuereinheit 152 ausgestaltet, den erfassten Wert des Pegels der differentiellen Busspannung VDIFF bzw. den Ist-Wert 1551 mit einem Sollwert 1552 für den Pegel der differentiellen Busspannung VDIFF zu vergleichen. Somit prüft die Emissionsreduktionseinheit 15, genauer gesagt deren Auswerte- und Steuereinheit 152, auf der Grundlage des Erfassungsergebnisses des Detektors 151, ob der erfasste Ist-Wert 1551 des Pegels der differentiellen Busspannung VDIFF von dem Sollwert 1552 für den Pegel abweicht oder nicht.

Außerdem ist die Auswerte- und Steuereinheit 152 ausgestaltet, die Treiberschaltung 1213 für die Endstufen 1211, 1212 des Senders 121, genauer gesagt deren Transistoren, so zu beeinflussen, dass der Pegel der differentiellen Busspannung VDIFF auf den Sollwert 1552 geregelt wird. Dabei stellt die Emissionsreduktionseinheit 15 sicher, dass bei sich ändernder Buslast, nämlich in dem Bereich von 45 bis 70 Ohm, der Pegel der differentiellen Busspannung VDIFF immer so klein als möglich eingestellt wird, jedoch sicher über dem derzeit geforderten Minimalwert aus der Spezifikation in der CAN-Physical-Layer ISO11898-2:2016 liegt, also über 1,4 V bzw. 1,5 V. Der Minimalwert ist jedoch bei Bedarf auch auf einen anderen Wert einstellbar.

Der Detektor 151 kann als Differenzverstärker ausgeführt sein, dessen Ausgang, der dem Ist-Wert 1551 entspricht, mit einem Referenzwert als Sollwert 1552 verglichen wird. Die Treiberschaltung 1213 für die Endstufen 1211, 1212 des Senders 121 kann beispielsweise als Referenzpfad eines Stromspiegels ausgeführt sein, dessen Ausgänge Transistoren sind, welche auf die jeweilige Busader 41, 42 senden. Diese Transistoren als Ausgänge des Stromspiegels sind in Fig. 2 veranschaulicht. Der Einfluss der Emissionsreduktionseinheit 15 oder ihres Detektors 151 kann darin liegen, dass die Referenzströme der Stromspiegel variiert werden und damit der Pegel der differentiellen Busspannung VDIFF variiert wird.

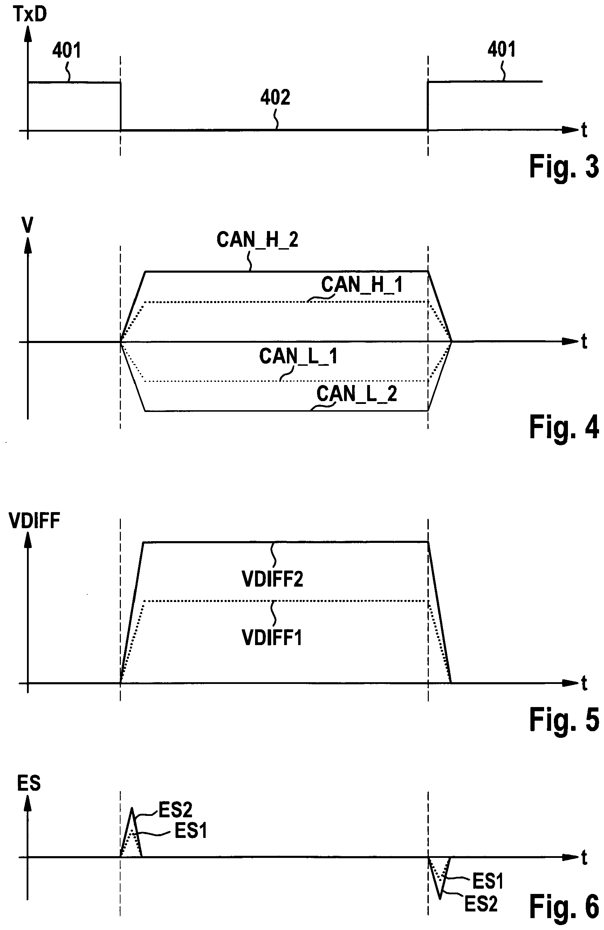

Der Betrieb der Sende-/Empfangseinrichtung 12 gemäß Fig. 2 ist nachfolgend auch anhand der Signalverläufe von Fig. 3 bis Fig. 6 näher erläutert.

Fig. 3 bis Fig. 6 zeigen jeweils einen zeitlichen Verlauf von Signalen bei der Sende-/Empfangseinrichtung 12 gemäß dem vorliegenden Ausführungsbeispiel. Hierbei stellen sich in Folge eines in Fig. 3 gezeigten Sendesignals TxD Signale ein, die in Fig. 4 bis Fig. 6 dargestellt sind. In Fig. 4 bis Fig. 6 ist jeweils zum Vergleich zusätzlich ein entsprechender Signalverlauf bei einer herkömmlichen Sende-/Empfangseinrichtung gezeigt, wie beispielsweise der Sende-/Empfangseinrichtung 13 der Teilnehmerstation 20. Hierbei sind die Signalverläufe für die Sende-/Empfangseinrichtung 12 gemäß dem vorliegenden Ausführungsbeispiel jeweils als gestrichelte Linie dargestellt. Die Signalverläufe für die Sende-/Empfangseinrichtung 13 sind dagegen jeweils als durchgezogene Linie dargestellt.

Bei dem Sendesignal TxD von Fig. 3 findet im Laufe der Zeit t bei drei aufeinanderfolgenden Bits ein Zustandswechsel von einem ersten Buszustand 401 zu einem zweiten Buszustand 402 und dann wieder zurück zu dem ersten Buszustand 401 statt. Der erste Buszustand 401 kann auch als Rezessivzustand oder hoher Pegel bezeichnet werden. Der zweite Buszustand 402 kann auch als Dominantzustand oder niedriger Pegel bezeichnet werden. In Folge des Sendesignals TxD von Fig. 3 stellt sich die Spannung V für die Signale CAN_H und CAN_L gemäß Fig. 4 ein. Hierbei stellen sich bei der Sende-/Empfangseinrichtung 12 die Signale CAN_H_1 und CAN_L_1 ein. Bei der Sende-/Empfangseinrichtung 13 stellen sich dagegen die Signale CAN_H_2 und CAN_L_2 ein. In Folge davon stellt sich gemäß Fig. 5 eine Differenzspannung VDIFF = CAN_H - CAN_L ein. Hierbei stellt sich bei der Sende-/Empfangseinrichtung 12 eine Differenzspannung VDIFF_1 = CAN_H_1 - CAN_L_1 ein. Bei der Sende-/Empfangseinrichtung 13 stellt sich dagegen gemäß Fig. 5 eine Differenzspannung VDIFF_2 = CAN_H_2 - CAN_L_2 ein. Außerdem stellt sich als Folge der genannten Signalverläufe ein Emissionssignal ES gemäß Fig. 6 ein. Hierbei stellt sich bei der Sende-/Empfangseinrichtung 12 ein Emissionssignal ES1 ein. Bei der Sende-/Empfangseinrichtung 13 stellt sich ein Emissionssignal ES2 ein.

Aus dem Vergleich der Signale von Fig. 4 bis Fig. 6 für die Sende-/Empfangseinrichtungen 12, 13 ergibt sich sehr deutlich, dass die Sende-/Empfangseinrichtung 12 gemäß dem vorliegenden Ausführungsbeispiel bei demselben Sendesignal TxD im dominanten Buszustand 402 eine deutlich geringeres differentielles Bussignal VDIFF aufweist. Außerdem ergibt der Vergleich, dass das Emissionssignal ES1 bei der Sende-/Empfangseinrichtung 12 deutlich geringere Spitzen nach einem Zustandswechsel von rezessiv nach dominant und bei einem Zustandswechsel von dominant nach rezessiv aufweist.

Somit hat die Sende-/Empfangseinrichtung 12 gemäß dem vorliegenden Ausführungsbeispiel eine leitungsgebundene Emission, die deutlich geringer ist als die leitungsgebundene Emission einer herkömmlichen Sende-/Empfangseinrichtung bzw. der Sende-/Empfangseinrichtung 13.

Die Auswerte- und Steuereinheit 152 ist derart ausgestaltet, dass der Regeleingriff im Betrieb der Sende-/Empfangseinrichtung 12 von Fig. 2 grundsätzlich nur beim Senden erfolgt und wenn ein dominanter Buszustand, also ein zweiter Buszustand 402, vorliegt. Es muss also gelten, dass das Sendesignal TxD einen dominanten Bitzustand hat. Somit schaltet die Auswerte- und Steuereinheit 152 die Treiberschaltung 123 für die Endstufen 1211, 1212 nur an, wenn ein vorbestimmter Buszustand vorliegt. In anderen Worten, die Emissionsreduktionseinheit 15, genauer gesagt ihre Auswerte- und Steuereinheit 152 ist derart ausgestaltet, dass die Anschalteinheit 123 in Abhängigkeit von dem Erfassungsergebnis des Detektors 151 von der Emissionsreduktionseinheit 15 angeschaltet wird oder nicht.

Die Regelung der Pegel der differentiellen Busspannung VDIFF kann beispielsweise initial nach der Inbetriebnahme der Sende-/Empfangseinrichtung 12 erfolgen. Zusätzlich oder alternativ kann eine Regelung der Pegel der differentiellen Busspannung VDIFF von Nachricht 45, 47 zu Nachricht 45, 47 erfolgen. In den genannten Fällen wird immer der zuletzt verwendete Einstellwert der Treiberschaltung 1213 gespeichert.

Mit der Sende-/Empfangseinrichtung 12 wird somit mit Hilfe der Emissionsreduktionseinheit 15 ein Verfahren zur Reduktion von leitungsgebundenen Emissionen ausgeführt.

Fig. 4 zeigt eine Sende-/Empfangseinrichtung 120 gemäß einem zweiten Ausführungsbeispiel.

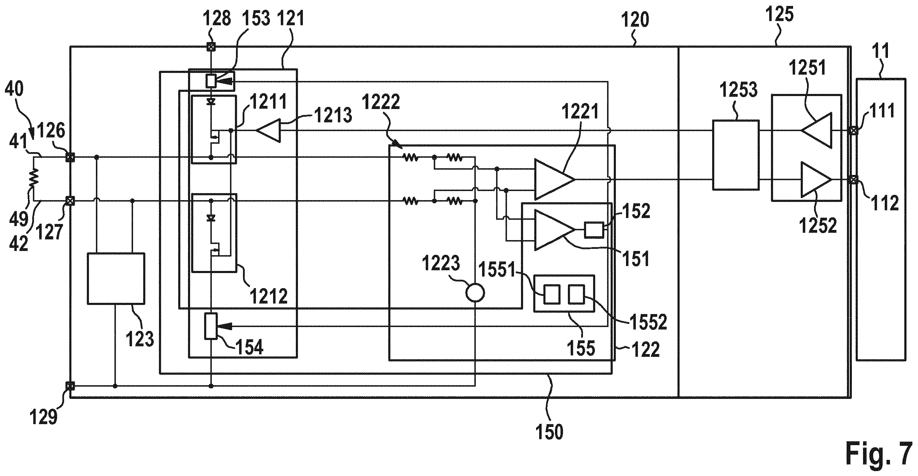

Fig. 7 zeigt den grundlegenden Aufbau einer Sende-/Empfangseinrichtung 120 gemäß einem zweiten Ausführungsbeispiel. Die Sende-/Empfangseinrichtung 120 weist eine Emissionsreduktionseinheit 150 auf. Das Bussystem 1 und die Sende-/Empfangseinrichtung 120 sind bis auf die nachfolgend beschriebenen Unterschiede auf die gleiche Weise aufgebaut, wie zuvor gemäß dem vorangehenden Ausführungsbeispiel in Bezug auf die Sende-/Empfangseinrichtung 12 beschrieben.

Die Emissionsreduktionseinheit 150 hat zusätzlich einen Widerstand 153 im Sendepfad zwischen der ersten Busader 41 für CAN_H und dem Anschluss 128 für CAN_SUPPLY. Zudem hat die Emissionsreduktionseinheit 150 einen Widerstand 154 im Sendepfad zwischen der zweiten Busader 42 für CAN_L und dem Anschluss 129 für CAN_GND.

Die Widerstände 153, 154 sind jeweils derart ausgestaltet, dass ihr Widerstandswert veränderbar ist. Die Widerstände 153, 154 können beispielsweise jeweils als Potentiometer ausgestaltet sein.

Die Emissionsreduktionseinheit 150, genauer gesagt ihre Auswerte- und Steuereinheit 152 ist derart ausgestaltet, dass die Auswerte- und Steuereinheit 152 eine Änderung des Widerstandswerts des Widerstands 153 und oder eine Änderung des Widerstandswerts des Widerstands 154 in Abhängigkeit von dem Erfassungsergebnis des Detektors 151 ausführt.

Infolgedessen stellen sich die gleichen Signale ein, wie zuvor für die Sende-/Empfangseinrichtung 12 in Bezug auf Fig. 3 bis Fig. 6 beschrieben. Somit erzielt die Emissionsreduktionseinheit 150 gemäß dem zweiten Ausführungsbeispiel die gleichen Vorteile, wie in Bezug auf die Sende-/Empfangseinrichtung 12 bzw. deren Emissionsreduktionseinheit 15 gemäß dem vorangehenden Ausführungsbeispiel genannt.

Alle zuvor beschriebenen Ausgestaltungen der Emissionsreduktionseinheiten 15, 150 der Sende-/Empfangseinrichtungen 12, 120, der Teilnehmerstationen 10, 20, 30, des Bussystems 1 und des darin ausgeführten Verfahrens gemäß dem ersten und zweiten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß dem ersten und/oder zweiten Ausführungsbeispiel und deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch auch ein anderes serielles Kommunikationssetzwerk sein.

Die Anzahl und Anordnung der Teilnehmerstationen 10, 20, 30 in dem Bussystem 1 gemäß dem ersten und zweiten Ausführungsbeispiel und deren Modifikationen ist beliebig. Insbesondere können auch nur Teilnehmerstationen 10 oder Teilnehmerstationen 20 oder Teilnehmerstationen 30 in den Bussystemen 1 des ersten oder zweiten Ausführungsbeispiels vorhanden sein. Unabhängig davon können auch nur Emissionsreduktionseinheiten 15 oder nur Emissionsreduktionseinheiten 150 gemäß den verschiedenen zuvor beschriebenen Ausgestaltungsvarianten vorhanden sein.

Die Funktionalität der zuvor beschriebenen Ausführungsbeispiele lässt sich in einem Transceiver bzw. einer Sende-/Empfangseinrichtung 12, 13 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Sende-/Empfangseinrichtung (12; 120) für ein Bussystem (1), mit einem Sender (121) zum Senden eines Sendesignals (TxD) an eine erste Busader (41) eines Busses (40) des Bussystems (1), bei welchem Bussystem (1) zumindest zeitweise ein exklusiver, kollisionsfreier Zugriff einer Teilnehmerstation (10, 20, 30) auf den Bus (40) des Bussystems (1) gewährleistet ist, und zum Senden des Sendesignals (TxD) an eine zweite Busader (42) des Busses (40),
einem Empfänger (122) zum Empfangen des auf den Busadern (41, 42) übertragenen Bussignals (CAN_H, CAN_L), und
einer Emissionsreduktionseinheit (15; 150) zur Steuerung der Signale für die Busadern (41, 42) auf der Grundlage eines erfassten Pegels einer differenziellen Busspannung (VDIFF) der Signale auf den Busadern (41, 42) ausgestaltet ist, wenn ein dominanter Zustand (402) des Sendesignals (TxD) auftritt,
**dadurch gekennzeichnet, dass** die Emissionsreduktionseinheit (15; 150) ausgestaltet ist festzustellen, dass bei sich ändernder Buslast der Pegel der differentiellen Busspannung (VDIFF) immer so klein als möglich eingestellt wird, jedoch sicher über einem geforderten Minimalwert.

2. Sende-/Empfangseinrichtung (12) nach Anspruch 1, wobei die Emissionsreduktionseinheit (15) zur Steuerung einer Treiberschaltung (1213) für Endstufen (1211, 1212) des Senders (121) auf der Grundlage des erfassten Pegels der differenziellen Busspannung (VDIFF) ausgestaltet ist, wenn ein dominanter Zustand (402) des Sendesignals (TxD) auftritt.

3. Sende-/Empfangseinrichtung (120) nach einem der vorangehenden Ansprüche, wobei die Emissionsreduktionseinheit (150) zur Steuerung der Signale für die Busadern (41, 42) ausgestaltet ist, einen Widerstandswert eines Widerstands (153) zu steuern, der in einem Sendepfad zwischen der ersten Busader (41) und einem Anschluss (128) für eine Spannungsversorgung der Sende-/Empfangseinrichtung (120) angeordnet ist

4. Sende-/Empfangseinrichtung (12) nach einem der vorangehenden Sende-/Empfangseinrichtung (120) nach einem der vorangehenden Ansprüche, wobei die Emissionsreduktionseinheit (150) zur Steuerung der Signale für die Busadern (41, 42) ausgestaltet ist, einen Widerstandswert eines Widerstands (154) zu steuern, der in einem Sendepfad zwischen der zweiten Busader (42) und einem Anschluss (129) für Masse der Sende-/Empfangseinrichtung (120) angeordnet ist.

5. Sende-/Empfangseinrichtung (12) nach einem der vorangehenden Ansprüche, wobei die Emissionsreduktionseinheit (15; 150) zur Erfassung einer differenzieilen Busspannung (VDIFF) der Signale auf den Busadern (41, 42) einen Detektor (151) aufweist, weicher parallel zu den Eingängen eines Empfangskomparators (1221) des Empfängers (122) geschaltet ist.

6. Sende-/Empfangseinrichtung (12) nach Anspruch 5, wobei der Detektor (151) ein Differenzverstärker ist.

7. Sende-/Empfangseinrichtung (12; 13) nach einem der vorangehenden Ansprüche, wobei die Emissionsreduktionseinheit (15; 150) ausgestaltet ist, für den dominanten Buszustand (402) des Sendesignals (TxD) den erfassten Pegel der differenziellen Busspannung (VDIFF) mit einem Sollwert (1552) zu vergleichen.

8. Sende-/Empfangseinrichtung (12; 120) nach einem der vorangehenden Ansprüche, wobei die Sende-/Empfangseinrichtung (12; 120) eine CAN FD Sende-/Empfangseinrichtung (12; 120) ist.

9. Bussystem (1), mit
einem Bus (40), und
mindestens zwei Teilnehmerstationen (10; 20; 30), welche über den Bus (40) derart miteinander verbunden sind, dass sie miteinander kommunizieren können,
wobei mindestens eine der mindestens zwei Teilnehmerstationen (10; 20; 30) eine Sende-/Empfangseinrichtung (12) nach einem der vorangehenden Ansprüche aufweist.

10. Verfahren zur Reduktion von leitungsgebundenen Emissionen, wobei das Verfahren mit einer Sende-/Empfangseinrichtung (12; 120) für ein Bussystem (1) ausgeführt wird, bei welchem zumindest zeitweise ein exklusiver, kollisionsfreier Zugriff einer Teilnehmerstation (10, 20, 30) auf einen Bus (40) des Bussystems (1) gewährleistet ist, wobei die Sende-/Empfangseinrichtung (12; 120) einen Sender (121), einen Empfänger (122) und eine Emissionsreduktionseinheit (15; 150) aufweist, wobei das Verfahren die Schritte aufweist,
Senden, mit dem Sender (121), eines Sendesignals (TxD) an eine erste Busader (41) des Busses (40),
Senden des Sendesignals (TxD) an eine zweite Busader (42) des Busses (40),
Empfangen, mit dem Empfänger (122), des auf den Busadern (41, 42) übertragenen Bussignals (CAN_H, CAN_L), und
Steuern, mit der Emissionsreduktionseinheit (15; 150), der Signale für die Busadern (41, 42) auf der Grundlage eines erfassten Pegels einer differenziellen Busspannung (VDIFF) der Signale auf den Busadern (41, 42), wenn ein dominanter Zustand (402) des Sendesignals (TxD) auftritt, **dadurch gekennzeichnet, dass** die Emissionsreduktionseinheit (15; 150) sicherstellt, dass bei sich ändernder Buslast der Pegel der differentiellen Busspannung (VDIFF) immer so klein als möglich eingestellt wird, jedoch sicher über einem geforderten Minimalwert.

## Claims

1. Transmission/reception device (12; 120) for a bus system (1), having
a transmitter (121) for transmitting a transmission signal (TxD) to a first bus wire (41) of a bus (40) of the bus system (1), which bus system (1) exhibits at least intermittently ensured exclusive collision-free access by a subscriber station (10, 20, 30) to the bus (40) of the bus system (1), and for transmitting the transmission signal (TxD) to a second bus wire (42) of the bus (40),
a receiver (122) for receiving the bus signal (CAN_H, CAN_L) transmitted on the bus wires (41, 42), and
an emission reduction unit (15; 150) for controlling the signals for the bus wires (41, 42) on the basis of a detected level of a differential bus voltage (VDIFF) of the signals on the bus wires (41, 42) is configured when a dominant state (402) of the transmission signal (TxD) occurs,
**characterized in that** the emission reduction unit (15; 150) is configured to determine that, for a changing bus load, the level of the differential bus voltage (VDIFF) is always set to be as low as possible, but safely above a required minimum value.

2. Transmission/reception device (12) according to Claim 1, wherein the emission reduction unit (15) is configured to control a driver circuit (1213) for output stages (1211, 1212) of the transmitter (121) on the basis of the detected level of the differential bus voltage (VDIFF) when a dominant state (402) of the transmission signal (TxD) occurs.

3. Transmission/reception device (120) according to either of the preceding claims, wherein the emission reduction unit (150), in order to control the signals for the bus wires (41, 42), is configured to control a resistance value of a resistor (153) arranged in a transmission path between the first bus wire (41) and a connection (128) for a voltage supply of the transmission/reception device (120).

4. Transmission/reception device (12) according to one of the preceding transmission/reception device (120) according to one of the preceding claims, wherein the emission reduction unit (150), in order to control the signals for the bus wires (41, 42), is configured to control a resistance value of a resistor (154) arranged in a transmission path between the second bus wire (42) and a connection (129) for earth of the transmission/reception device (120).

5. Transmission/reception device (12) according to one of the preceding claims, wherein the emission reduction unit (15; 150), in order to detect a differential bus voltage (VDIFF) of the signals on the bus wires (41, 42), has a detector (151) connected in parallel with the inputs of a reception comparator (1221) of the receiver (122).

6. Transmission/reception device (12) according to Claim 5, wherein the detector (151) is a differential amplifier.

7. Transmission/reception device (12; 13) according to one of the preceding claims, wherein the emission reduction unit (15; 150) is configured so as, for the dominant bus state (402) of the transmission signal (TxD), to compare the detected level of the differential bus voltage (VDIFF) with a setpoint value (1552).

8. Transmission/reception device (12; 120) according to one of the preceding claims, wherein the transmission/reception device (12; 120) is a CAN FD transmission/reception device (12; 120).

9. Bus system (1), having
a bus (40), and
at least two subscriber stations (10; 20; 30) that are connected to one another via the bus (40) such that they can communicate with one another,
wherein at least one of the at least two subscriber stations (10; 20; 30) has a transmission/reception device (12) according to one of the preceding claims.

10. Method for reducing line-conducted emissions, wherein the method is performed using a transmission/reception device (12; 120) for a bus system (1), which bus system exhibits at least intermittently ensured exclusive collision-free access by a subscriber station (10, 20, 30) to a bus (40) of the bus system (1), wherein the transmission/reception device (12; 120) has a transmitter (121), a receiver (122) and an emission reduction unit (15; 150), wherein the method comprises the steps of
transmitting, using the transmitter (121), a transmission signal (TxD) to a first bus wire (41) of the bus (40),
transmitting the transmission signal (TxD) to a second bus wire (42) of the bus (40),
receiving, using the receiver (122), the bus signal (CAN_H, CAN_L) transmitted on the bus wires (41, 42), and
controlling, using the emission reduction unit (15; 150), the signals for the bus wires (41, 42) on the basis of a detected level of a differential bus voltage (VDIFF) of the signals on the bus wires (41, 42) when a dominant state (402) of the transmission signal (TxD) occurs,
**characterized in that** the emission reduction unit (15; 150) ensures that, for a changing bus load, the level of the differential bus voltage (VDIFF) is always set to be as low as possible, but safely above a required minimum value.

## Revendications

1. Dispositif d'émission/réception (12 ; 120) destiné à un système de bus (1), ledit dispositif comprenant un émetteur (121) destiné à transmettre un signal d'émission (TxD) à un premier conducteur (41) d'un bus (40) du système de bus (1), système de bus (1) dans lequel un accès exclusif sans collision d'un périphérique (10, 20, 30) au bus (40) du système de bus (1) est au moins temporairement garanti, et destiné à transmettre le signal d'émission (TxD) à un deuxième conducteur (42) du bus (40),
un récepteur (122) destiné à recevoir le signal de bus (CAN_H, CAN_L) transmis sur les conducteurs de bus (41, 42), et
une unité de réduction d'émissions (15 ; 150) destinée à commander les signaux des conducteurs de bus (41, 42) sur la base d'un niveau détecté d'une tension de bus différentielle (VDIFF) des signaux sur les conducteurs de bus (41, 42) est conçue lorsqu'un état dominant (402) du signal d'émission (TxD) survient,
**caractérisé en ce que** l'unité de réduction d'émissions (15 ; 150) est conçue pour déterminer si, lorsque la charge de bus varie, le niveau de la tension de bus différentielle (VDIFF) est toujours réglé aussi bas que possible, mais infailliblement au-dessus d'une valeur minimale requise.

2. Dispositif d'émission/réception (12) selon la revendication 1, l'unité de réduction d'émissions (15) étant conçue pour commander un circuit pilote (1213) destiné à des étages de sortie (1211, 1212) de l'émetteur (121) sur la base du niveau détecté de la tension de bus différentielle (VDIFF) lorsqu'un état dominant (402) du signal d'émission (TxD) survient.

3. Dispositif d'émission/réception (120) selon l'une des revendications précédentes, l'unité de réduction d'émissions (150) destinée à commander les signaux des conducteurs de bus (41, 42) étant conçue pour commander une valeur de résistance d'une résistance (153) qui est disposée dans un chemin d'émission entre le premier conducteur de bus (41) et une borne (128) d'alimentation en tension du dispositif d'émission/réception (120).

4. Dispositif d'émission/réception (12) selon l'un des précédents dispositif d'émission/réception (120) selon l'une des revendications précédentes,
l'unité de réduction d'émissions (150) destinée à commander les signaux des conducteurs de bus (41, 42) étant conçue pour commander une valeur de résistance d'une résistance (154) qui est disposée dans un chemin d'émission entre le deuxième conducteur de bus (42) et une borne (129) de masse du dispositif d'émission/réception (120).

5. Dispositif d'émission/réception (12) selon l'une des revendications précédentes, l'unité de réduction d'émissions (15 ; 150) destinée à détecter une tension de bus différentielle (VDIFF) des signaux sur les conducteurs de bus (41, 42) comportant un détecteur (151) qui est monté parallèlement aux entrées d'un comparateur de réception (1221) du récepteur (122).

6. Dispositif d'émission/réception (12) selon la revendication 5, le détecteur (151) étant un amplificateur différentiel.

7. Dispositif d'émission/réception (12 ; 13) selon l'une des revendications précédentes, l'unité de réduction d'émissions (15 ; 150) étant conçue pour comparer, pour l'état de bus dominant (402) du signal d'émission (TxD), le niveau détecté de la tension de bus différentielle (VDIFF) à une valeur de consigne (1552).

8. Dispositif d'émission/réception (12 ; 120) selon l'une des revendications précédentes, le dispositif d'émission/réception (12 ; 120) étant un dispositif d'émission/réception CAN FD (12 ; 120).

9. Système de bus (1), comprenant
un bus (40) et
au moins deux périphériques (10 ; 20 ; 30) qui sont reliés entre eux par le biais du bus (40) de manière à pouvoir communiquer entre eux,
l'un au moins des au moins deux périphériques (10 ; 20 ; 30) comportant un dispositif d'émission/réception (12) selon l'une des revendications précédentes.

10. Procédé de réduction d'émissions de ligne, le procédé étant mis en œuvre au moyen d'un dispositif d'émission/réception (12 ; 120) destiné à un système de bus (1) dans lequel un accès exclusif sans collision d'un périphérique (10, 20, 30) à un bus (40) du système de bus (1) est au moins temporairement garanti, le dispositif d'émission/réception (12 ; 120) comportant un émetteur (121), un récepteur (122) et une unité de réduction d'émissions (15 ; 150), le procédé comprenant les étapes suivantes
émettre, au moyen de l'émetteur (121), un signal d'émission (TxD) sur un premier conducteur (41) du bus (40),
émettre le signal de transmission (TxD) sur un deuxième conducteur (42) du bus (40),
recevoir, au moyen du récepteur (122), le signal de bus (CAN_H, CAN_L) transmis sur les conducteur de bus (41, 42), et
commander, au moyen de l'unité de réduction d'émissions (15 ; 150), les signaux des conducteurs de bus (41, 42) sur la base d'un niveau détecté d'une tension de bus différentielle (VDIFF) des signaux sur les fils de bus (41, 42) lorsqu'un état dominant (402) du signal d'émission (TxD) survient,
**caractérisé en ce que** l'unité de réduction d'émissions (15 ; 150) garantit qu'en cas de variation de charge de bus le niveau de la tension de bus différentielle (VDIFF) est toujours réglé aussi bas que possible, mais infailliblement au-dessus d'une valeur minimale requise.
